# EUROPEAN PATENT APPLICATION

(11) **EP 3 321 940 A1**
(43) Date of publication of application: **16.05.2018**
(21) Application number: 16821467.4
(22) Date of filing: 07.07.2016
(51) Int. Cl.: H01B 3/30, C08K 3/22, C08L 101/00, C09D 5/25, C09D 7/12, C09D 201/00, H01B 3/00, H01B 7/02

(54) **ELECTRICAL INSULATING RESIN COMPOSITION FOR PARTIAL-DISCHARGE RESISTANCE**

(30) Priority: 09.07.2015 JP 2015138127
(71) Applicant: Sumitomo Seika Chemicals Co., Ltd., Kako-gun, Hyogo 675-0145 (JP); National Institute of Advanced Industrial Science and Technology, Tokyo 100-8921 (JP); Shizuoka Institute of Science and Technology, Shizuoka-shi, Shizuoka 420-8538 (JP)
(72) Inventor: HAYASHIZAKA, Noriyuki, Kako-gun Hyogo 675-0145 (JP); KAWASAKI, Kazunori, Kako-gun Hyogo 675-0145 (JP); YAMASHITA, Masayuki, Kako-gun Hyogo 675-0145 (JP); EBINA, Takeo, Sendai-shi Miyagi 983-8551 (JP); ISHIDA, Takahiro, Fukuroi-shi Shizuoka 437-8555 (JP); HATTORI, Satomi, Fukuroi-shi Shizuoka 437-8555 (JP)
(74) Representative: Webster, Jeremy Mark
(86) International application number: PCT/JP2016/070160
(87) International publication number: WO 2017/006999

(57) **Abstract**

An object of the present invention is to provide an improved partial discharge-resistant electrical insulating resin composition that can inhibit deterioration of an insulator due to partial discharge. The partial discharge-resistant electrical insulating resin composition of the present invention comprises a layered double hydroxide and a resin.

## Description

### Technical Field

The present invention relates to a partial discharge-resistant electrical insulating resin composition with good partial discharge resistance, a method for producing the composition, as well as an insulating varnish, an electrodeposition paint, a cured product, an electric wire, a rotating electric machine, an insulating film, and an insulating coating produced with the partial discharge-resistant electrical insulating resin composition.

### Background Art

Along with the recent growing awareness of energy conservation, the number of electrical apparatuses in which inverter control is performed (e.g., household appliances such as air-conditioners, refrigerators, fluorescent lamps, and electromagnetic cookers; automobiles; electric trains; and elevators) has increased. Inverter control is a control method in which an inverter is used to control the speed of an electric motor or the like through a variable voltage variable frequency AC power supply. An inverter is an efficient variable-speed voltage controller, which is controlled by high-speed switching elements operating at several to several hundreds of kHz. At the time of voltage application, such an inverter may cause a high voltage surge to be generated.

As materials forming the coils of electrical apparatuses in which this inverter control is performed, insulated electric wires whose conductors are coated with insulating coatings, such as enameled wires, are commonly used. In such an insulated electric wire, partial discharge may occur due to the occurrence of an abrupt overvoltage caused by the inverter control (inverter surge). The "partial discharge" refers to an event (discharge phenomenon) in which a weak electric spark occurs in an insulator or microvoids (gaps) between the conductor and the insulator. If partial discharge occurs in an insulated electric wire, the insulator may be broken, ultimately leading to a breakdown in which insulation cannot be maintained. This may result in a very short lifetime of the insulated electric wire.

### Citation List

### Patent Literature

Patent Literature 1: JP 2012-204270 A
Patent Literature 2: JP 2014-040528 A

### Non Patent Literature

Non Patent Literature 1: TOSHIBA REVIEW Vol. 59, No. 7 (2004)
Non Patent Literature 2: Tsukasa OHTA, Kazuo IIDA, "Effect of Magnesium Hydroxide on Withstand Voltage Lifetime of Epoxy Composites", 2014, IEEJ Transactions on Fundamentals and Materials, Vol. 134, No. 5, pp. 327-333

### Summary of Invention

### Technical Problem

Possible causes of such a deterioration of an insulator due to partial discharge are considered to be as follows: 1) deterioration of the insulating material caused by cleavage of the main chain of a resin due to a collision between charged particles from partial discharge; 2) dissolution or chemical decomposition of the insulating material caused by a local increase in temperature due to partial discharge; and 3) deterioration of the insulating material caused by a secondary product such as ozone formed by partial discharge.

Various methods are known for inhibiting deterioration of an insulator due to partial discharge.

Among the above-listed three causes, with regard to the cause 1), it is known that cleavage of the main chain of a resin due to partial discharge can be inhibited by dispersing a filler into the resin (referred to as a "barrier effect"). For example, Patent Literature 1 discloses using spherical silica particles as a filler, and Non Patent Literature 1 discloses using a flat layered silicate (cation-exchange clay) as a filler. These methods, however, cannot solve the causes 2) and 3), although they can inhibit the cause 1). In particular, when the voltage is high, these methods fail to sufficiently inhibit deterioration of an insulator due to partial discharge.

Patent Literature 2 and Non Patent Literature 2 disclose methods in which a metal hydroxide such as magnesium hydroxide as a filler is dispersed in a resin, such that the filler releases water when it is subject to partial discharge to reduce heat generation due to partial discharge. These methods can inhibit the cause 2), and simultaneously reduce the formation of a secondary product caused by a temperature increase set forth in 3).

However, for example, a metal hydroxide has a barrier effect smaller than that of the spherical silica particles disclosed in Patent Literature 1 or the layered silicate disclosed in Non Patent Literature 1, and hence, is less effective against the cause 1). Moreover, because a metal hydroxide is strongly alkaline, it may accelerate deterioration of the resin in which it is mixed. Furthermore, the method using magnesium hydroxide or the like disclosed in Non Patent Literature 2 involves simply mixing aggregated particles of magnesium hydroxide into a resin; thus, the dispersed state of the particles is uneven, and it is necessary to increase the volume of the filler to achieve a sufficient effect. Furthermore, in the method using a metal hydroxide or a metal carbonate disclosed in Patent Literature 2, a very fine filler is used, and the dispersed state of the filler is improved; however, aggregation of particles still occurs, and a sufficient effect is not achieved.

As described above, deterioration of an insulator due to partial discharge leads to a breakdown, and this problem has not yet been sufficiently solved. Thus, there is a need for the development of an insulator with superior partial discharge resistance. Additionally, the problem of a breakdown due to partial discharge is found not only in electric wires, but also in insulating films such as interphase insulating sheets for electric motors; insulating varnishes for coating and fixing the outer layer of motor coils; insulating electric wires for electric power apparatuses such as power generators, transformers, and switchgears; filling-molded insulating members for electric power apparatuses such as transformers and switchgears; and the like. Thus, there is a need for the development of an improved partial discharge-resistant material applicable to insulators for a wide range of applications.

As used herein, the "breakdown" refers to the phenomenon in which when the voltage applied to an insulator exceeds a certain limit, the insulator is electrically broken to lose its insulating properties, and causes current to flow.

A main object of the present invention is to provide an improved partial discharge-resistant electrical insulating resin composition that can solve all of the aforementioned causes 1) to 3), and inhibit deterioration of an insulator due to partial discharge. Another object of the present invention is to provide a method for producing such an improved partial discharge-resistant electrical insulating resin composition, as well as an insulating varnish, an electrodeposition paint, a cured product, an electric wire, a rotating electric machine, an insulating film, and an insulating coating produced with the resin composition.

### Solution to Problem

As a result of extensive research to solve the aforementioned problem, the present inventors have found that a resin composition comprising a layered double hydroxide and a resin serves as a partial discharge-resistant electrical insulating resin composition with good partial discharge resistance. The present inventors have also found that the partial discharge-resistant electrical insulating resin composition of the present invention can favorably inhibit deterioration of an insulator due to partial discharge caused by an inverter surge. Furthermore, the present inventors have found that through the step of pre-gelling the layered double hydroxide in the production of the partial discharge-resistant electrical insulating resin composition of the present invention, the partial discharge-resistant electrical insulating resin composition can have superior partial discharge resistance.

The present invention has been completed as a result of further study based on these findings.

In summary, the present invention provides the following aspects of the invention:
Item 1. A partial discharge-resistant electrical insulating resin composition comprising a layered double hydroxide and a resin.
Item 2. The partial discharge-resistant electrical insulating resin composition according to item 1, wherein the layered double hydroxide is nanoparticles.
Item 3. The partial discharge-resistant electrical insulating resin composition according to item 1 or 2, wherein the layered double hydroxide is a swellable hydrotalcite compound.
Item 4. The partial discharge-resistant electrical insulating resin composition according to any one of items 1 to 3, wherein the resin is at least one resin selected from the group consisting of polyvinyl formal resin, polyurethane resin, polyamide resin, polyester resin, polyimide resin, polyamide-imide resin, polyetherimide resin, polyester-imide resin, and epoxy resin.
Item 5. The partial discharge-resistant electrical insulating resin composition according to any one of items 1 to 4, wherein a content of the layered double hydroxide is 0.1 to 60% by mass.
Item 6. The partial discharge-resistant electrical insulating resin composition according to any one of items 1 to 5, which is resistant to an inverter surge.
Item 7. The partial discharge-resistant electrical insulating resin composition according to any one of items 1 to 6, which is for use with an electrical apparatus in which inverter control is performed.
Item 8. An insulating varnish comprising the partial discharge-resistant electrical insulating resin composition according to any one of items 1 to 7 and a solvent.
Item 9. An electrodeposition paint comprising the partial discharge-resistant electrical insulating resin composition according to any one of items 1 to 7 and a solvent.
Item 10. A cured product formed from the partial discharge-resistant electrical insulating resin composition according to any one of items 1 to 7.
Item 11. A method for producing the partial discharge-resistant electrical insulating resin composition according to any one of items 1 to 7, comprising the steps of pre-gelling the layered double hydroxide; and mixing the pre-gelled layered double hydroxide with the resin.
Item 12. An electric wire comprising a conductor; and an insulating coating comprising a single layer or a plurality of layers formed on an outer periphery of the conductor, at least one layer of the insulating coating comprising the partial discharge-resistant electrical insulating resin composition according to any one of items 1 to 7 or a cured product thereof.
Item 13. A rotating electric machine comprising the electric wire according to item 12.
Item 14. An insulating film comprising an insulating layer comprising the partial discharge-resistant electrical insulating resin composition according to any one of items 1 to 7 or a cured product thereof.
Item 15. An insulating coating comprising an insulating layer comprising the partial discharge-resistant electrical insulating resin composition according to any one of items 1 to 7 or a cured product thereof.
Item 16. Use of a resin composition comprising a layered double hydroxide and a resin for inhibiting deterioration due to partial discharge.
Item 17. An insulating article comprising a partial discharge-resistant electrical insulating resin composition comprising a layered double hydroxide and a resin.

### Advantageous Effects of Invention

The present invention can provide a partial discharge-resistant electrical insulating resin composition with good partial discharge resistance, as well as an insulating varnish, an electrodeposition paint, a cured product, an electric wire, a rotating electric machine, an insulating film, and an insulating coating produced with the resin composition. Furthermore, the use of the partial discharge-resistant electrical insulating resin composition can increase the lifetime of coils of rotating electric machines such as motors and power generators; insulating films such as interphase insulating sheets; insulating varnishes for coating and fixing the outer layer of motor coils; and insulating members for electric power apparatuses such as transformers and switchgears.

### Brief Description of Drawings

Fig. 1 is a schematic diagram showing a part of a testing method for evaluation of partial discharge resistance used in the Examples.
Fig. 2 is a schematic diagram showing a part of a testing method for evaluation of partial discharge resistance used in the Examples.
Fig. 3 is a schematic diagram showing a part of a testing method for evaluation of partial discharge resistance used in the Examples.
Fig. 4 is a schematic diagram showing a part of a testing method for evaluation of partial discharge resistance used in the Examples.

### Description of Embodiments

### 1. Partial Discharge-Resistant Electrical Insulating Resin Composition

The electrical insulating resin composition of the present invention, which is resistant to partial discharge, comprises a layered double hydroxide and a resin. The partial discharge-resistant electrical insulating resin composition of the present invention will be hereinafter described in detail.

### (Layered Double Hydroxide)

A layered double hydroxide is a layered compound with metal hydroxide layers. Such a layered double hydroxide typically has a layered structure in which metal hydroxide layers and intermediate layers composed of anions and interlayer water are alternately formed. The layered double hydroxide has an anion-exchange capability. Because the partial discharge-resistant electrical insulating resin composition of the present invention comprises a layered double hydroxide and a resin, it exhibits good partial discharge resistance. Details of this mechanism, though not necessarily clear, can be believed to be as follows, for example: it is presumed that when the layered double hydroxide in the partial discharge-resistant electrical insulating resin composition is subject to partial discharge, it releases water to efficiently absorb thermal energy, thereby effectively inhibiting deterioration of the resin due to thermal energy (temperature increase) from the partial discharge.

Moreover, it is believed that because the layered double hydroxide has the property of releasing water over a wide range of temperatures, it reduces heat generation due to partial discharge over a wide range of temperatures. Consequently, it is presumed that the layered double hydroxide can suppress a temperature increase to efficiently inhibit the formation of a secondary product such as ozone.

Furthermore, in the case where the partial discharge-resistant electrical insulating resin composition of the present invention is applied to, for example, a conductor, it is presumed that because of its flat shape, the layered double hydroxide exhibits a high barrier effect when it is present in the resin that covers the conductor, as with a flat layered silicate. It is also presumed that the layered double hydroxide maintains such a high barrier effect even after releasing the interlayer water because it maintains its layered crystal structure.

Furthermore, it is presumed that the layered double hydroxide can maintain effects such as the above-described effect of reducing heat generation due to partial discharge because, after releasing the interlayer water and structural water, it can absorb water vapor in the air and then again release the water.

While the layered double hydroxide is not limited to a particular type as long as it can improve the partial discharge resistance, it is preferably a hydrotalcite compound. A known hydrotalcite compound may be used as the hydrotalcite compound.

Specific examples of hydrotalcite compounds include compounds with a structure represented by general formula (1):

[M²⁺₁₋ₓM³⁺ₓ(OH)₂]ₓ⁺[Aⁿ⁻_{x/n} · mH₂O]ₓ⁻ (1)

wherein M²⁺ is a divalent metal; M³⁺ is a trivalent metal; Aⁿ⁻ is an anion with a valence of n; x is in the range of 0 < x < 0.33; m is an integer from 0 to 15, preferably 1 to 15; and n is an integer from 1 to 4.

In the general formula above, examples of the divalent metal M²⁺ include Mg²⁺, Zn²⁺, Ni²⁺, Mn²⁺, Fe²⁺, Co²⁺, Cu²⁺, Ca²⁺, Cd²⁺, and V²⁺. These divalent metals may be used alone or as a mixture of two or more as the divalent metal M²⁺. In particular, Mg²⁺ is preferred as the divalent metal M²⁺.

Examples of the trivalent metal M³⁺ include Al³⁺, Fe³⁺, Cr³⁺, Co³⁺, and In³⁺. These trivalent metals may be used alone or as a mixture of two or more as the trivalent metal M³⁺. In particular, Al³⁺ is preferred as the trivalent metal M³⁺.

Examples of the anion Aⁿ⁻ with a valence of n include I⁻, Cl⁻, NO₃⁻, HCO₃⁻, CO₃²⁻ , OH⁻, SO₄²⁻, SiO₄⁴⁻, bicarbonate ion, salicylate ion, oxalate ion, citrate ion, lactate ion, glycine ion, and acetate ion. These anions with a valence of n may be used alone or as a mixture of two or more as the anion Aⁿ⁻ with a valence of n. In particular, CO₃²⁻ or lactate ion is preferred as the anion Aⁿ⁻ with a valence of n.

Other hydrotalcite compounds include Mg-, Al-, and Zr⁴⁺-based or Zn- and Ti⁴⁺-based hydrotalcite compounds in which some or all of trivalent metal ions have been substituted with tetravalent metal ions; and Li-Al-based hydrotalcite compounds based on M⁺ and M³⁺, wherein M⁺ is a monovalent metal, and M³⁺ is a trivalent metal. Each of these metals may be composed of a single metal or a mixture of two or more metals.

In particular, the hydrotalcite compound of the present invention is preferably a compound with a structure represented by general formula (1) above, in that it can further improve the partial discharge resistance.

Specific examples of preferred hydrotalcite compounds include [Mg_{4.5}Al₂(OH)₁₃]²⁺[CO₃·3.5H₂O]²⁻; Mg_{4.3}Al₂(OH)_{12.6}CO₃·3.5H₂O; Mg₃Al(OH)₈(CO₃²⁻)_{0.5}·2H₂O; and Mg₆Al₂(OH)₁₆(2CH₃CH(OH)COO⁻)·4H₂O.

The hydrotalcite compound of the present invention is preferably a surface-modified hydrotalcite compound. The surface modification of the hydrotalcite compound may be accomplished using a known method such as an organic surface treatment with a silane coupling agent or a titanate coupling agent, for example. Examples of preferred surface modifiers include saturated higher fatty acids.

The hydrotalcite compound may be a natural or synthetic product. Examples of methods for synthesizing hydrotalcite compounds include known methods described in, for example, JP 46-2280 B, JP 47-32198 B, JP 50-30039 B, JP 48-29477 B, and JP 51-29129 B.

The hydrotalcite compound may also be a commercially available product. Examples of commercially available hydrotalcite compounds include "DHT-4A", "DHT-4A-2", and "DHT-6" from Kyowa Chemical Industry Co., Ltd.

The hydrotalcite compound is also preferably a swellable hydrotalcite compound. Such a swellable hydrotalcite compound can further improve the partial discharge resistance. As used herein, the "swellable hydrotalcite compound" refers to a hydrotalcite that is readily dispersible in water or an organic solvent by delamination or exfoliation; in the hydrotalcite, an interlayer anion has been substituted with another anion different from the interlayer anion. Examples of such hydrotalcites include those in which carbonate ions have been substituted with amino acid ions, carboxylate ions, organic sulfonate ions, or isethionate ions. The other anion is not limited to particular anions, as long as the hydrotalcite compound in which the interlayer anion has been substituted with the other anion can swell in water or an organic solvent. For example, glycine ion, isethionate ion, or lactate ion is preferred in that they allow delamination.

Specifically, the swellable hydrotalcite compound is preferably a compound with a structure represented by general formula (I) above, wherein the anion Aⁿ⁻ with a valence of n is bicarbonate ion, salicylate ion, oxalate ion, citrate ion, acetate ion, isethionate ion, lactate ion, or glycine ion, and more preferably lactate ion or glycine ion.

The use of the swellable hydrotalcite compound can further improve the partial discharge resistance, because the hydrotalcite compound has better dispersibility in the resin, thus facilitating the formation of a nanocomposite with the resin.

As used herein, the "formation of a nanocomposite" refers to dispersing, in a resin, particles of a layered double hydroxide of the order of 1 to 500 nm.

The swellable hydrotalcite compound may be synthesized by adopting a known method. For example, a swellable, lactate ion-based hydrotalcite compound can be synthesized using a known method described in JP 2012-246194 A, for example.

The swellable hydrotalcite compound is preferably prepared as a suspension by dispersing the hydrotalcite compound in water at a concentration of 10 g/L, wherein the suspension has a turbidity of 400 NTU or less after being allowed to stand for 24 hours. The turbidity is a value measured with a turbidimeter.

The layered double hydroxide of the present invention is preferably nanoparticles. The "nanoparticles" refers to nanosized particles, and specifically, particles with a particle diameter of about 1 nm to 1 µm. The "nanoparticles" also includes particles whose particle diameter in at least the width direction or thickness is about 1 nm to 1 µm when the layered double hydroxide has a flat structure, for example.

When the layered double hydroxide is a hydrotalcite compound, the hydrotalcite compound preferably has an average particle diameter of 1 nm to 5 µm, and more preferably 5 to 500 nm.

The average particle diameter refers to the particle diameter at a cumulative value of 50% in the particle size distribution measured with a laser diffraction scattering-type particle size measurement apparatus (Microtrac).

The layered double hydroxide preferably has an aspect ratio (length/width) of 2 or more, more preferably 4 to 100, and still more preferably 5 to 100. When the aspect ratio is 2 or more, the layered double hydroxide can be aligned regularly in a direction opposed to erosion due to partial discharge, and can thereby have an increased area to be covered to increase the effect of partial discharge resistance.

As used herein, the "aspect ratio" refers to a ratio of the length to the width (length/width) of particles observed with a scanning electron microscope at 5000× magnification. Specifically, the aspect ratio is determined by dividing the average value of particle diameters of plate-like particles (layered double hydroxide) by the average value of plate thicknesses of the plate-like particles; specifically, by dividing the average value of particle diameters of at least 100 plate-like particles of the layered double hydroxide, by the average value of plate thicknesses of the plate-like particles. As used herein, the particle diameter of a plate-like particle corresponds to the diameter of a circle having the same area as that of a main surface of a plate-like particle.

The content of the layered double hydroxide in the partial discharge-resistant electrical insulating resin composition is preferably 0.1 to 60% by mass, and more preferably 1 to 60% by mass. When the content of the layered double hydroxide is 0.1 to 60% by mass, a resin composition having superior partial discharge resistance can be achieved. The lower limit of the content of the layered double hydroxide is more preferably 2% by mass, and still more preferably 5% by mass. The upper limit of the content of the layered double hydroxide is more preferably 50% by mass, and still more preferably 40% by mass.

### (Resin)

The resin to be used in the partial discharge-resistant electrical insulating resin composition of the present invention is not limited to particular resins, as long as it is commonly used as insulating materials, and does not inhibit the layered double hydroxide from dispersing in the resin. Examples of such resins include polyvinyl formal resin, polyester-imide resin, polyurethane resin, polyamide resin, polyester resin, polyimide resin, polyamide-imide resin, acrylic resin, polyvinyl fluoride resin, polyethylene resin, polyetheretherketone resin, fluororesin, polyethersulfone resin, polyetherimide resin, polyester-imide resin, epoxy resin, silicone resin, polyphenylene sulfide resin, phenol resin, lignin resin, polylactic resin, polydicyclopentadiene resin, polytricyclopentadiene resin, and combinations of two or more of these resins.

In particular, from the viewpoint of allowing the layered double hydroxide to be dispersed well, and allowing the partial discharge resistance to be further improved, the resin is preferably at least one resin selected from the group consisting of polyvinyl formal resin, polyurethane resin, polyamide resin, polyester resin, polyimide resin, polyamide-imide resin, polyetherimide resin, polyester-imide resin, and epoxy resin, and is more preferably at least one resin selected from the group consisting of polyamide-imide resin, polyester-imide resin, polyimide resin, and polyetherimide resin.

The content of the resin in the partial discharge-resistant electrical insulating resin composition is preferably 30 to 99% by mass, and more preferably 60 to 95% by mass.

### (Other Components)

The partial discharge-resistant electrical insulating resin composition of the present invention, which contains the layered double hydroxide and the resin, may further optionally contain other components.

Examples of other components include commonly known additives used in electrical insulating resin compositions, such as other resins and inorganic fillers. Examples of additives include tackifiers such as alkylphenol resin, alkylphenol-acetylene resin, xylene resin, coumarone-indene resin, terpene resin, and rosin; bromine-based flame retardants such as polybromodiphenyl oxide and tetrabromobisphenol A; chlorine-based flame retardants such as chlorinated paraffins and perchlorocyclodecane; phosphate-based flame retardants such as phosphates and halogen-containing phosphates; boron-based flame retardants; oxide-based flame retardants such as antimony trioxide; phenol-based, phosphorus-based, and sulfur-based antioxidants; inorganic fillers including silica, layered silicates, aluminum oxide, magnesium oxide, boron nitride, silicon nitride, and aluminum nitride; common plastic compounding components such as thermal stabilizers, photostabilizers, UV absorbents, lubricants, pigments, cross-linking agents, cross-linking aids, silane coupling agents, and titanate coupling agents; and aromatic polyamide fibers. The electrical insulating resin composition may contain, for example, 0.1 to 10% by mass of these additives.

### 2. Method for Producing Partial Discharge-Resistant Electrical Insulating Resin Composition

The partial discharge-resistant electrical insulating resin composition of the present invention can be produced by mixing the layered double hydroxide, the resin, and optionally additives, using a commonly known method. Mixing may be performed with heating, as required. Mixing may be accomplished using commonly known mixing means including, for example, a kneader, a pressurizing kneader, a mixing roll, a Banbury mixer, a twin-screw extruder, a planetary centrifugal mixer, and a homogenizing mixer.

The layered double hydroxide may be ground before being mixed with the resin. Because the ground layered double hydroxide is smaller and uniform in particle diameter, upon mixing with the resin, the layered double hydroxide is dispersed well in the resin, which allows the partial discharge resistance of the resulting resin composition to be further improved. Grinding may be accomplished using commonly known grinding means including, for example, a ball mill, a rod mill, a mass-colloider, a dry jet mill, a homogenizer, and a wet jet mill.

To form a composite by mixing the layered double hydroxide and the resin, the layered double hydroxide may be directly dispersed in the resin; however, it is preferred to prepare a pre-gel in which the layered double hydroxide is dispersed in an organic solvent or water, and then disperse the pre-gel in the resin.

By preparing the pre-gel and then mixing it with the resin, a composite between the layered double hydroxide and the resin in which the layered double hydroxide is dispersed better can be formed.

That is, the method for producing the partial discharge-resistant electrical insulating resin composition of the present invention preferably includes:
step (1) of pre-gelling the layered double hydroxide; and
step (2) of mixing the pre-gelled layered double hydroxide with the resin.

Because the layered double hydroxide is pre-gelled before being mixed with the resin, upon mixing with the resin, the layered double hydroxide can be dispersed better in the resin, which allows the partial discharge resistance of the resulting resin composition to be further improved.

In step (1), the layered double hydroxide may be pre-gelled by, for example, dispersing the layered double hydroxide in an organic solvent or water.

Examples of organic solvents in which the layered double hydroxide is to be dispersed include polar solvents such as N-methyl-2-pyrrolidone, N,N-dimethylacetamide, N,N-dimethylformamide, methanol, ethanol, and propanol; and mixed solvents obtained by adding water to these polar solvents.

To pre-gel the layered double hydroxide, it is preferred to disperse 1 to 100 parts by mass of the layered double hydroxide in 100 parts by mass of an organic solvent, water, or a mixed solvent. The layered double hydroxide may be dispersed using a common stirring means such as a mixer, for example. The conditions under which the layered double hydroxide is dispersed, such as the stirring rate, may be selected as appropriate depending on the solvent.

Next, in step (2), the pre-gelled layered double hydroxide is mixed with the resin. The pre-gelled layered double hydroxide may be mixed with the resin, using the commonly known mixing means described above. Defoaming is preferably performed during mixing. The conditions under which mixing is performed may be selected as appropriate depending on the solvent.

### 3. Use

The partial discharge-resistant electrical insulating resin composition of the present invention has good partial discharge resistance. Thus, the partial discharge-resistant electrical insulating resin composition of the present invention can be suitably used as an insulating material of an insulator in which partial discharge resistance is demanded. In particular, the partial discharge-resistant electrical insulating resin composition of the present invention can favorably inhibit deterioration of an insulator due to partial discharge caused by an inverter surge. Thus, the partial discharge-resistant electrical insulating resin composition of the present invention is preferably used for inverter surge-resistant applications.

The partial discharge-resistant electrical insulating resin composition of the present invention is also preferably used in electrical apparatuses (such as motors) in which inverter control is performed. The partial discharge-resistant electrical insulating resin composition of the present invention may be used in an electrical apparatus in which inverter control is performed, by, for example, applying, to the electrical apparatus, an insulated electric wire whose conductor is coated with the partial discharge-resistant electrical insulating resin composition of the present invention, or an insulating sheet formed using the partial discharge-resistant electrical insulating resin composition of the present invention.

A cured product formed from the partial discharge-resistant electrical insulating resin composition of the present invention similarly has good partial discharge resistance. Such a cured product is obtained by, for example, using a curable resin as the resin contained in the partial discharge-resistant electrical insulating resin composition of the present invention, optionally with a curing agent, and curing the electrical insulating resin composition of the present invention.

The curable resin is not limited to particular resins, and may be a known curable resin such as a thermally curable resin or UV curable resin from the examples of resins mentioned in the resin section above. The curing agent may be selected as appropriate from known curing agents, in accordance with the curable resin used. Curing may be accomplished using a known curing means that is selected as appropriate from drying, heating, and UV irradiation, for example, in accordance with the curable resin used.

Examples of applications of the partial discharge-resistant electrical insulating resin composition of the present invention include an insulating varnish and an electrodeposition paint. For example, an insulating varnish or an electrodeposition paint can be prepared using the partial discharge-resistant electrical insulating resin composition of the present invention, and then used to coat the surface of a member such as a conductor, thereby imparting good partial discharge resistance to the member.

### 4. Insulating Varnish

An insulating varnish comprising the partial discharge-resistant electrical insulating resin composition of the present invention and a solvent can exhibit good partial discharge resistance.

The solvent is not limited to particular solvents as long as it is a known organic solvent conventionally used in an insulating varnish. Specific examples of such solvents include water; polar organic solvents such as N-methyl-2-pyrrolidone, N,N-dimethylacetamide, N,N-dimethylformamide, dimethylsulfoxide, tetramethylurea, hexaethylphosphoric triamide, and γ-butyrolactone; ketones such as acetone, methyl ethyl ketone, methyl isobutyl ketone, and cyclohexanone; esters such as methyl acetate, ethyl acetate, butyl acetate, and diethyl oxalate; ethers such as diethyl ether, ethylene glycol dimethyl ether, diethylene glycol monomethyl ether, ethylene glycol monobutyl ether (butyl cellosolve), diethylene glycol dimethyl ether, and tetrahydrofuran; hydrocarbons such as hexane, heptane, benzene, toluene, and xylene; halogenated hydrocarbons such as dichloromethane and chlorobenzene; phenols such as cresol and chlorophenol; tertiary amines such as pyridine; and alcohols such as methanol, ethanol, and propanol. These solvents may be used alone or as a mixture of two or more.

The blending ratio of the partial discharge-resistant electrical insulating resin composition of the present invention and the solvent is not particularly limited, and may be selected as appropriate within the range of proportions where the resulting product can be used as an insulating varnish. Typically, the partial discharge-resistant electrical insulating resin composition and the solvent may be blended such that the proportion of nonvolatile components in the insulating varnish is 5 to 60% by mass.

### 5. Electrodeposition Paint

An electrodeposition paint comprising the partial discharge-resistant electrical insulating resin composition of the present invention and a solvent can exhibit good partial discharge resistance.

The solvent is not limited to particular solvents as long as it is a known solvent conventionally used in an electrodeposition paint. Examples of such solvents include water; amide-based solvents such as N,N-dimethylformamide, N,N-dimethylacetamide, and N-methyl-2-pyrrolidone; alcohol-based solvents such as methanol, ethanol, propanol, butanol, methoxy propanol, and benzyl alcohol; polyhydric alcohol-based solvents such as ethylene glycol, diethylene glycol, triethylene glycol, glycerol, propylene glycol, dipropylene glycol, and methylpropanediol; ether-based solvents such as dimethyl ether, diethyl ether, dipropyl ether, dibutyl ether, tetrahydrofuran, diethylene glycol, diethylene glycol dimethyl ether, and triethylene glycol; ester-based solvents such as butyl acetate, ethyl acetate, isobutyl acetate, propylene glycol methyl acetate, ethyl cellosolve, butyl cellosolve, 2-methylcellosolve acetate, ethyl cellosolve acetate, butyl cellosolve acetate, γ-butyrolactone, γ-valerolactone, δ-valerolactone, γ-caprolactone, ε-caprolactone, and α-methyl-y-butyrolactone; ketone-based solvents such as acetone, methyl ethyl ketone, methyl isobutyl ketone, diisobutyl ketone, cyclopentanone, cyclohexanone, and acetophenone; carbonate-based solvents such as diethyl carbonate and propylene carbonate; hydrocarbon-based solvents such as hexane, heptane, octane, benzene, toluene, and xylene; phenol-based solvents such as phenol, m-cresol, p-cresol, 3-chlorophenol, and 4-chlorophenol; and other solvents such as 1,3-dimethyl-2-imidazolidinone, dimethyl sulfoxide, sulfolane, turpentine, mineral spirits, and petroleum naphtha-based solvents. These solvents may be used alone or as a mixture of two or more.

A known resin conventionally used in an electrodeposition paint may be used as the resin contained in the partial discharge-resistant electrical insulating resin composition of the present invention.

The blending ratio of the partial discharge-resistant electrical insulating resin composition of the present invention and the solvent is not particularly limited, and may be selected as appropriate within the range of proportions where the resulting product can be used as an electrodeposition paint. Typically, the partial discharge-resistant electrical insulating resin composition and the solvent may be blended such that the proportion of nonvolatile components in the electrodeposition paint is 1 to 60% by mass.

Other examples of applications of the partial discharge-resistant electrical insulating resin composition of the present invention include an electric wire, a rotating electric machine, an insulating film, and an insulating coating in which the partial discharge-resistant electrical insulating resin composition of the present invention or a cured product thereof is used as a portion or all of the insulator. That is, the present invention also provides an insulating article comprising a partial discharge-resistant electrical insulating resin composition comprising a layered double hydroxide and a resin. Examples of such insulating articles include an electric wire, a rotating electric machine, an insulating film, and an insulating coating.

### 6. Electric Wire

The partial discharge-resistant electrical insulating resin composition of the present invention is applicable to an insulated electric wire. When the partial discharge-resistant electrical insulating resin composition of the present invention is applied to an insulator for an electric wire, an insulated electric wire with good partial discharge resistance can be obtained, leading to an improved insulation lifetime of the electric wire.

That is, the present invention also provides an electric wire comprising a conductor and an insulating coating comprising a single layer or a plurality of layers formed on an outer periphery of the conductor, at least one layer of the insulating coating comprising the partial discharge-resistant electrical insulating resin composition or a cured product thereof.

Examples of materials of the conductor include metal materials such as copper, aluminum, and silver.

The insulating coating comprises a single layer or a plurality of layers formed on the outer periphery of the conductor. In the electric wire of the present invention, at least one layer of the insulating coating comprises the partial discharge-resistant electrical insulating resin composition or a cured product thereof.

Examples of other layers of the insulating coating include layers formed of polyamide-imide resin or polyester-imide resin.

The electric wire of the present invention may be produced by, for example, applying a dispersion liquid containing the partial discharge-resistant electrical insulating resin composition onto the surface of a conductor, or onto another layer that coats the conductor to form an insulating coating by baking, for example.

### 7. Rotating Electric Machine

The partial discharge-resistant electrical insulating resin composition of the present invention is applicable to a rotating electric machine.

That is, the rotating electric machine of the present invention is a rotating electric machine produced using the above-described electric wire.

Examples of such rotating electric machines include motors and power generators (generators).

### 8. Insulating Film

The partial discharge-resistant electrical insulating resin composition of the present invention is also applicable to an insulating film. That is, the insulating film of the present invention is an insulating film comprising an insulating layer comprising the partial discharge-resistant electrical insulating resin composition or a cured product thereof.

The insulating film may be formed of a single layer, or may have a base material and the insulating layer formed on the base material.

The thickness of the insulating film is preferably 2 to 300 µm, and more preferably 5 to 200 µm. If the thickness is less than 2 µm, the insulating film may develop a defect during production. If the thickness exceeds 300 µm, the flexibility required in the insulating film may be lost.

The insulating film formed of a single layer may be produced, for example, as follows: The partial discharge-resistant electrical insulating resin composition of the present invention is molded into a sheet by extrusion molding. Alternatively, the partial discharge-resistant electrical insulating resin composition of the present invention is dissolved or dispersed in a solvent, as required, and then applied onto a base material such as polyethylene terephthalate to form an insulating layer by heating, drying, or curing the resin composition, as required; subsequently, the base material is removed.

The insulating film having a base material and the insulating layer formed on the base material may be produced, for example, as follows: The partial discharge-resistant electrical insulating resin composition of the present invention is dissolved or dispersed in a solvent, as required, and then applied onto a base material to form an insulating film by heating, drying, or curing the resin composition, as required.

Examples of base materials include synthetic resins such as polyethylene terephthalate, polyethylene naphthalate, polyester, polyethylene, and polypropylene.

When the insulating film having a base material and an insulating layer, the thickness of the insulating layer is preferably 2 to 300 µm, and more preferably 5 to 200 µm, for example. If the thickness is less than 2 µm, the insulating film may develop a defect during production. If the thickness exceeds 300 µm, the flexibility required in the insulating film may be lost.

The thickness of the base material is, for example, 2 to 300 µm, and preferably 5 to 200 µm, although not limited thereto.

### 9. Insulating Coating

The partial discharge-resistant electrical insulating resin composition of the present invention is also applicable to an insulating coating such as a solder resist for use with an electronic substrate or the like. That is, the insulating coating of the present invention is an insulating coating comprising an insulating layer comprising the partial discharge-resistant electrical insulating resin composition or a cured product thereof.

The insulating coating of the present invention may be produced, for example, as follows: The partial discharge-resistant electrical insulating resin composition of the present invention is melted by heating and then applied to the surface of an article to be coated such as an electronic substrate, and is molded to form an insulating layer. Alternatively, the partial discharge-resistant electrical insulating resin composition of the present invention is used as an electrodeposition paint to form an insulating layer by electrodeposition on an article to be coated. Alternatively, the partial discharge-resistant electrical insulating resin composition of the present invention is dissolved or dispersed in a solvent, as required, and then applied to an article to be coated to form an insulating layer by heating, drying, or curing the resin composition, as required.

When a gap in the base material, rather than the surface, is filled with the resin composition, a molded member can be obtained.

Examples of articles to be coated such as an electronic substrate include metal materials such as copper, aluminum, and silver.

As described above, because the partial discharge-resistant electrical insulating resin composition of the present invention has good partial discharge resistance, the application of the resin composition to an insulator in which partial discharge resistance is demanded can increase the lifetime of an insulating member.

### Examples

The present invention will be described more specifically below with reference to examples; however, the invention is not limited thereto.

### <Example 1>

### (Preparation of Pre-Gel of Layered Double Hydroxide)

As a layered double hydroxide, 3.0 g of a hydrotalcite compound ("DHT-4A-2" from Kyowa Chemical Industry Co., Ltd; average particle diameter: 440 nm, aspect ratio: 10), 4.5 g of N-methyl-2-pyrrolidone (NMP), and 6.0 g of water were placed in a plastic sealed vessel, and the mixture was stirred for 3 minutes using a planetary centrifugal mixer ("ARE-310" from THINKY CORPORATION) in the mixing mode (2000 rpm) to give a pre-gel in which the proportion of the hydrotalcite compound to the entire pre-gel was 22.2% by mass.

### (Preparation of Polyamide Acid Varnish)

In a 1-L four-neck flask equipped with a stirrer and a thermometer, 73.2 g of 4,4'-diaminodiphenylether and 832 g of NMP were placed and then dissolved by heating to 50°C with stirring. Next, 40 g of pyromellitic anhydride and 51 g of biphenyltetracarboxylic dianhydride were gradually added to the resulting solution. After the completion of the addition, the mixture was stirred for 1 hour to give a polyamide acid varnish in which an aromatic polyamide acid represented by the following formula (I) was dissolved in a first liquid, NMP, at a concentration of 16.4% by mass: 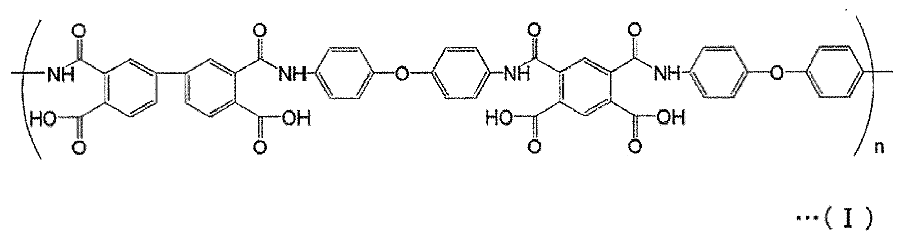 wherein n is an integer from 2 or more.

### (Preparation of Partial Discharge-Resistant Electrical Insulating Resin Composition Containing Hydrotalcite Compound)

In a plastic sealed vessel, 1.2 g of the hydrotalcite compound pre-gel (hydrotalcite compound content: 22.2% by mass) prepared above and 30.0 g of the polyamide acid varnish (aromatic polyamide acid content: 5.0 g, NMP content: 25.0 g) prepared above were placed. The mixture was then stirred for 5 minutes using a planetary centrifugal mixer ("ARE-310" from THINKY CORPORATION) in the mixing mode (2000 rpm) and then for 5 minutes in the defoaming mode (2200 rpm) to give a partial discharge-resistant electrical insulating resin composition containing the hydrotalcite compound. In the resulting partial discharge-resistant electrical insulating resin composition, the proportion of nonvolatile components to the entire dispersion was 16.9% by mass, and the proportion of the hydrotalcite compound to the entire nonvolatile components was 5.0% by mass.

### (Preparation of Insulating Film)

The partial discharge-resistant electrical insulating resin composition containing the hydrotalcite compound obtained above was applied to a 100-µm-thick rectangular PET (polyethylene terephthalate) film, using a blade coater set at a groove depth of 520 µm. The PET film being kept in a horizontal position was dried in a forced air oven sequentially for 15 minutes at 70°C, 45 minutes at 90°C, and 10 minutes at 130°C to form an insulating film on the PET film. This insulating film was removed from the PET film, and then heat-treated sequentially for 10 minutes at 150°C, 10 minutes at 200°C, 10 minutes at 250°C, and 60 minutes at 300°C to give an insulating film composed of the hydrotalcite compound and polyimide resin. The content of the hydrotalcite compound in the entire film was 5.0% by mass, and the thickness of the film was 51 µm.

### <Example 2>

### (Preparation of Lactate Ion-Substituted Layered Double Hydroxide)

In a 3-L four-neck flask equipped with a stirrer, 50 g of a hydrotalcite compound ("DHT-6" from Kyowa Chemical Industry Co., Ltd; average particle diameter: 0.5 µm, aspect ratio: 4.5) as a layered double hydroxide and 950 g of methanol were placed and then stirred under nitrogen; after 20 minutes, 13.5 g of lactic acid was added thereto, and the mixture was stirred for 2 hours at 45°C to substitute the interlayer ions of the hydrotalcite with lactate ions. The resulting product was subsequently filtered through a membrane filter with a pore size of 0.2 µm under a nitrogen flow, and the precipitate was thoroughly washed with methanol. The filtered-off precipitate was dried under vacuum to give 52 g of a white powder of a lactate ion-based hydrotalcite.

### (Preparation of Pre-Gel of Layered Double Hydroxide)

Eighty-nine grams of water was added to 11 g of the white powder of the lactate ion-based hydrotalcite obtained above, and the mixture was ground with a homogenizer and then subjected to an ultrasonic treatment to prepare a water dispersion of the lactate ion-based hydrotalcite (11.0% by mass). In a plastic sealed vessel, 5.0 g of the prepared water dispersion and 5.0 g of N-methyl-2-pyrrolidone (NMP) were placed, and the mixture was stirred for 3 minutes using a planetary centrifugal mixer ("ARE-310" from THINKY CORPORATION) in the mixing mode (2000 rpm) to give a pre-gel in which the proportion of the lactate ion-based hydrotalcite to the entire pre-gel was 5.5% by mass.

### (Preparation of Polyamide Acid Varnish)

In a 10-L four-neck flask equipped with a stirrer and a thermometer, 400 g of 4,4'-diaminodiphenylether and 4104 g of NMP were placed and then dissolved by heating to 50°C with stirring. Next, 220 g of pyromellitic anhydride and 280 g of biphenyltetracarboxylic dianhydride were gradually added to the resulting solution. After the completion of the addition, the mixture was stirred for 1 hour to give a polyamide acid varnish in which the aromatic polyamide acid represented by formula (I) above was dissolved in the first liquid, NMP, at a concentration of 18.0% by mass.

### (Preparation of Insulating Varnish)

In a plastic sealed vessel, 5.1 g of the lactate ion-based hydrotalcite pre-gel (5.5% by mass) prepared above and 50.0 g of the polyamide acid varnish (aromatic polyamide acid content: 9.0 g, NMP content: 41.0 g) prepared above were placed. The mixture was then stirred for 5 minutes using a planetary centrifugal mixer ("ARE-310" from THINKY CORPORATION) in the mixing mode (2000 rpm) and then for 5 minutes in the defoaming mode (2200 rpm) to give an insulating varnish containing the partial discharge-resistant electrical insulating resin composition. In the resulting insulating varnish, the proportion of nonvolatile components to the entire dispersion was 17.6% by mass, and the proportion of the lactate ion-based hydrotalcite to the entire nonvolatile components was 3.0% by mass.

### (Preparation of Insulating Film)

The insulating varnish obtained above was applied to a 100-µm-thick rectangular PET film, using a blade coater set at a groove depth of 550 µm. The PET film being kept in a horizontal position was dried in a forced air oven sequentially for 15 minutes at 70°C, 45 minutes at 90°C, and 10 minutes at 130°C to form an insulating film on the PET film. This insulating film was removed from the PET film, and then heat-treated sequentially for 10 minutes at 150°C, 10 minutes at 200°C, 10 minutes at 250°C, and 60 minutes at 300°C to give an insulating film composed of the lactate ion-based hydrotalcite and polyimide resin. The content of the lactate ion-based hydrotalcite in the entire film was 3.0% by mass, and the thickness of the film was 53 µm.

### <Example 3>

### (Preparation of Insulating Varnish)

In a plastic sealed vessel, 8.6 g of a pre-gel of a lactate ion-based hydrotalcite (5.5% by mass) prepared as in the preparation of the pre-gel of the layered double hydroxide in Example 2 and 50.0 g of a polyamide acid varnish (aromatic polyamide acid content: 9.0 g, NMP content: 41.0 g) prepared as in Example 2 were placed. The mixture was then stirred for 5 minutes using a planetary centrifugal mixer ("ARE-310" from THINKY CORPORATION) in the mixing mode (2000 rpm) and then for 5 minutes in the defoaming mode (2200 rpm) to give an insulating varnish containing the partial discharge-resistant electrical insulating resin composition. In the resulting insulating varnish, the proportion of nonvolatile components to the entire dispersion was 16.2% by mass, and the proportion of the lactate ion-based hydrotalcite to the entire nonvolatile components was 5.0% by mass.

### (Preparation of Insulating Film)

The insulating varnish obtained above was applied to a 100-µm-thick rectangular PET film, using a blade coater set at a groove depth of 450 µm. The PET film being kept in a horizontal position was dried in a forced air oven sequentially for 15 minutes at 70°C, 45 minutes at 90°C, and 10 minutes at 130°C to form an insulating film on the PET film. This insulating film was removed from the PET film, and then heat-treated sequentially for 10 minutes at 150°C, 10 minutes at 200°C, 10 minutes at 250°C, and 60 minutes at 300°C to give an insulating film composed of the hydrotalcite compound and polyimide resin. The content of the lactate ion-based hydrotalcite in the entire film was 5.0% by mass, and the thickness of the film was 41 µm.

### <Example 4>

### (Preparation of Insulating Film)

An insulating film was obtained as in (Preparation of Insulating Film) in Example 3, except that the blade coater was set at a groove depth of 450 µm. The content of the lactate ion-based hydrotalcite in the entire film was 5.0% by mass, and the thickness of the film was 47 µm.

### <Example 5>

### (Preparation of Insulating Film)

An insulating film was obtained as in (Preparation of Insulating Film) in Example 3, except that the blade coater was set at a groove depth of 500 µm. The content of the lactate ion-based hydrotalcite in the entire film was 5.0% by mass, and the thickness of the film was 52 µm.

### <Example 6>

### (Preparation of Pre-Gel of Layered Double Hydroxide)

In a plastic sealed vessel, 5 g of a methanol dispersion of the lactate ion-based hydrotalcite (11% by mass) prepared in Example 2 and 23.4 g of water were placed, and the mixture was stirred for 3 minutes using a planetary centrifugal mixer ("ARE-310" from THINKY CORPORATION) in the mixing mode (2000 rpm) to give a pre-gel in which the proportion of the lactate ion-based hydrotalcite compound to the entire pre-gel was 1.9% by mass.

### (Preparation of Electrodeposition Paint)

In a 300-mL four-neck flask equipped with a stirrer and a thermometer, 183 g of a polyamide acid varnish (aromatic polyamide acid content: 30 g, NMP content: 153 g) prepared as in Example 1 was placed, and then 7.8 g of a pre-gel of a lactate ion-based hydrotalcite (1.9% by mass) prepared as in Example 2 was gradually added thereto with stirring. Then, 117 g of benzyl alcohol was added thereto, and the mixture was stirred. Next, 11.8 g of pyridine was added to this solution with stirring, and then 188 g of water was gradually added thereto to give an electrodeposition paint containing the partial discharge-resistant electrical insulating resin composition. In the resulting electrodeposition paint, the proportion of nonvolatile components in the electrodeposition paint was 5.9% by mass, and the proportion of the lactate ion-based hydrotalcite to the entire nonvolatile components was 0.5% by mass.

### (Preparation of Insulating Coating)

An insulating coating was prepared with the electrodeposition paint, using a stainless steel vessel as a cathode, and a nickel-plated copper sheet to be coated with an electrodeposition coating as an anode. The electrodeposition paint prepared above was placed in the stainless steel vessel, and electrodeposition was performed with stirring for a current-application time of 5 minutes at a voltage of 10 V. The copper sheet was then slowly withdrawn from the electrodeposition paint. The copper sheet was hung in a forced air oven and dried sequentially for 20 minutes at 100°C and 60 minutes at 200°C to give a copper sheet coated with an insulating coating. The resulting insulating coating had a thickness of 19 µm.

### <Example 7>

### (Preparation of Partial Discharge-Resistant Electrical Insulating Resin Composition)

As a layered double hydroxide, 50.0 g of a hydrotalcite compound ("DHT-6" from Kyowa Chemical Industry Co., Ltd; average particle diameter: 0.5 µm, aspect ratio: 4.5) was placed in a beaker, and the beaker was put in a dryer at 250°C and dried for 1 hour. As a result, 43 g of the dried hydrotalcite compound was obtained. In this manner, the interlayer water was removed from the hydrotalcite compound.

Fifteen grams of the dried hydrotalcite compound was mixed with 100 g of an epoxy resin (containing a bisphenol type A liquid resin (Araldite CY225 from Nagase ChemteX Corporation) as a main resin, and a modified alicyclic acid anhydride (Hardener HY925 from Nagase ChemteX Corporation) as a curing agent). These components were mixed by stirring for 30 minutes at 70°C, and then vacuum-defoamed for 30 minutes at 70°C to prepare an epoxy resin composition containing the hydrotalcite compound. In the resulting partial discharge-resistant electrical insulating resin composition, the proportion of the hydrotalcite compound to the entire nonvolatile components was 13% by mass.

### <Comparative Example 1>

### (Preparation of Polyimide Insulating Film)

The polyamide acid varnish prepared in Example 1 was applied to a 100-µm-thick rectangular PET film, using a blade coater set at a groove depth of 500 µm. The PET film being kept in a horizontal position was dried in a forced air oven sequentially for 15 minutes at 70°C, 45 minutes at 90°C, and 10 minutes at 130°C to form a polyimide film on the PET film. This polyimide film was removed from the PET film, and then heat-treated sequentially for 10 minutes at 150°C, 10 minutes at 200°C, 10 minutes at 250°C, and 60 minutes at 300°C to give an insulating film composed of the polyimide resin. The resulting insulating film had a thickness of 45 µm.

### <Comparative Example 2>

### (Preparation of Colloidal Silica Pre-Gel)

In a plastic sealed vessel, 2.1 g of colloidal silica ("SNOWTEX N" from Nissan Chemical Industries, Ltd.; concentration: 20.4%, average particle diameter: 13 nm) and 1.7 g of NMP were placed, and the mixture was stirred for 3 minutes using a planetary centrifugal mixer ("ARE-310" from THINKY CORPORATION) in the mixing mode (2000 rpm) to give a pre-gel in which the proportion of the silica to the entire pre-gel was 11.4% by mass.

### (Preparation of Silica-Containing Varnish)

In a plastic sealed vessel, 3.8 g of the colloidal silica pre-gel (silica content: 11.4% by mass) prepared above and 50.0 g of a polyamide acid varnish (polyamide acid content: 8.2 g, NMP content: 41.8 g) prepared as in (Preparation of Polyamide Acid Varnish) in Example 1 were placed. The mixture was stirred for 5 minutes using a planetary centrifugal mixer ("ARE-310" from THINKY CORPORATION) in the mixing mode (2000 rpm) and then for 5 minutes in the defoaming mode (2200 rpm) to give a homogeneous silica-containing varnish. In the resulting varnish, the proportion of the silica to the entire nonvolatile components was 5.0% by mass, and the proportion of the nonvolatile components to the entire dispersion was 16.0% by mass.

### (Preparation of Silica-Containing Insulating Film)

The resulting silica-containing varnish was applied to a 100-µm-thick rectangular PET film, using a blade coater set at a groove depth of 550 µm. The PET film being kept in a horizontal position was dried in a forced air oven sequentially for 15 minutes at 70°C, 45 minutes at 90°C, and 10 minutes at 130°C to form a silica-containing film on the PET film. This film was removed from the PET film, and then heat-treated sequentially for 10 minutes at 150°C, 10 minutes at 200°C, 10 minutes at 250°C, and 60 minutes at 300°C to give an insulating film composed of the silica and polyimide resin. In the resulting insulating film, the silica content in the entire film was 5.0% by mass, and the thickness of the film was 48 µm.

### <Comparative Example 3>

An insulating film was prepared as in Comparative Example 1. The resulting film had a thickness of 44 µm.

### <Comparative Example 4>

An insulating film was prepared as in Comparative Example 1, except that the blade coater was set at a groove depth of 500 µm. The resulting film had a thickness of 50 µm.

### <Comparative Example 5>

An insulating film was prepared as in Comparative Example 1, except that the blade coater was set at a groove depth of 600 µm. The resulting film had a thickness of 54 µm.

### <Comparative Example 6>

### (Preparation of Electrodeposition Paint)

In a 300-mL four-neck flask equipped with a stirrer and a thermometer, 300 g of a polyamide acid varnish (aromatic polyamide acid content: 49.2 g, NMP content: 250.8 g) prepared as in Example 1 was placed, and then 11.8 g of pyridine was added thereto with stirring. Then, 200 g of water was gradually added thereto to give an electrodeposition paint in which the proportion of nonvolatile components in the electrodeposition paint was 9.6%.

### (Preparation of Insulating Coating)

An insulating coating was prepared with the electrodeposition paint, using a stainless steel vessel as a cathode, and a nickel-plated copper sheet to be coated with an electrodeposition coating as an anode. The electrodeposition paint prepared above was placed in the stainless steel vessel, and electrodeposition was performed with stirring for a current-application time of 5 minutes at a voltage of 10 V. The copper sheet was then slowly withdrawn from the electrodeposition paint. The copper sheet was hung in a forced air oven and dried sequentially for 20 minutes at 100°C and 60 minutes at 200°C to give a copper sheet coated with an insulating coating. The resulting insulating coating had a thickness of 19 µm.

### <Comparative Example 7>

### (Preparation of Epoxy Resin Composition)

One-hundred parts of an epoxy resin (containing a bisphenol type A liquid resin (Araldite CY225 from Nagase ChemteX Corporation) as a main resin, and a modified alicyclic acid anhydride (Hardener HY925 from Nagase ChemteX Corporation) as a curing agent) was mixed by stirring for 30 minutes at 70°C, and then vacuum-defoamed for 30 minutes at 70°C to prepare an epoxy resin composition.

### <Comparative Example 8>

### (Preparation of Silica-Containing Epoxy Resin Composition)

A silica-containing epoxy resin composition was prepared as in Example 7, except that spherical silica (average particle diameter: 1 µm) was used instead of the dried hydrotalcite compound.

### <Evaluation 1 of Partial Discharge Resistance>

The insulating films prepared in Example 1, and Comparative Examples 1 and 2 were evaluated using the following testing method based on "Three-layered electrode-system sample" in "Electrical Discharge Handbook" (edited by the IEEJ Publication Committee on Electrical Discharge Handbook, 2003).

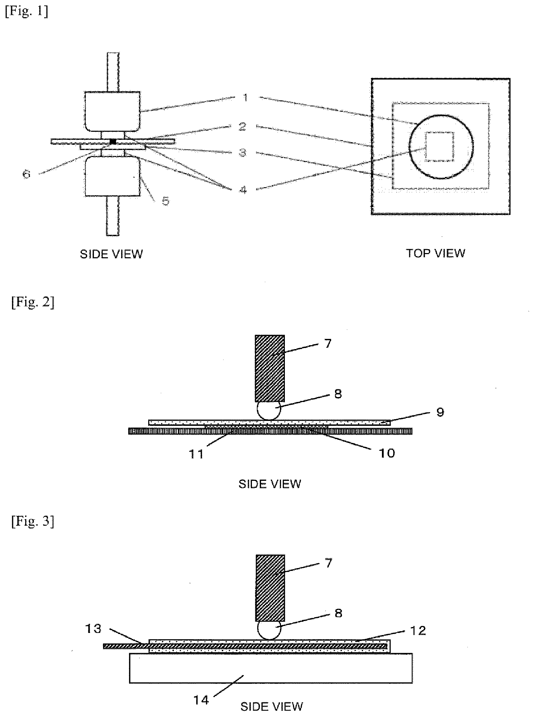

Specifically, the testing method was as follows: As shown in Fig. 1, an insulating film was inserted between an electrode 5, metal sheets 4, the insulating film 3 (thickness: 50±10 µm), a GAP-forming polyimide film 2 (60 µm) with a 5-mm-diameter void, and an electrode 1 sequentially from below, and partial discharge was induced in the void 6 of the GAP-forming polyimide film 2 to measure the time to a breakdown of the insulating film. A Volt-Endurance and Destruction Tester (Yasuda Seiki Seisakusho, Ltd.) was used as the measuring apparatus. Measurements were performed at a voltage of 4 kV, which was equal to or higher than the partial discharge starting voltage, and a frequency of 60 Hz. The results are shown in Table 1.

**Table 1**

| | Breakdown Time |
|---|---|
| Example 1 | 3 h 31 min |
| Comparative Example 1 | 6 min |
| Comparative Example 2 | 38 min |

It is seen from Table 1 that the insulating film of the example exhibited a longer time to a breakdown and superior partial discharge resistance, compared to the insulating films of the comparative examples.

### <Evaluation 2 of Partial Discharge Resistance>

### (Partial Discharge Resistance Test for Insulating Films)

The insulating films with different thicknesses prepared in Examples 2 to 5 and Comparative Examples 3 to 5 were evaluated using the following testing method.

Specifically, the testing method was as follows: As shown in Fig. 2, sequentially from below, a small amount of conductive grease 10 was applied to an aluminum sheet 11 to attach an insulating film 9 thereto. Then, a metal ball (diameter: 1 mm) 8 and the insulating film 9 were pressed under the weight of a copper tube 7, with the copper tube 7 being immovably fixed. The copper tube 7 and the aluminum sheet 11 were connected to a power supply, such that the metal ball 8 served as a high-voltage electrode and the aluminum sheet 11 as a low-voltage electrode. With this structure, partial discharge was induced across the metal ball and the insulating film, and the time to a breakdown of the insulating film was measured. A Volt-Endurance and Destruction Tester (No. 175 from Yasuda Seiki Seisakusho, Ltd.) was used as the measuring apparatus. Measurements were performed at a voltage of 3.5 kV, which was equal to or higher than the partial discharge starting voltage, and a frequency of 60 Hz. The results are shown in Table 2.

**Table 2**

| | Lactate Ion-Based Hydrotalcite Content (Mass%) | Thickness (µm) | Breakdown Time (h) |
|---|---|---|---|
| Example 2 | 3.0 | 53 | 46 |
| Example 3 | 5.0 | 41 | 9.7 |
| Example 4 | 5.0 | 47 | 12 |
| Example 5 | 5.0 | 52 | 41 |
| Comparative Example 3 | Not Added | 44 | 3.1 |
| Comparative Example 4 | Not Added | 50 | 5.5 |
| Comparative Example 5 | Not Added | 54 | 8.6 |

It is seen from Table 2 that each of the insulating films of the examples obtained by adding the lactate ion-based hydrotalcite exhibited a longer time to a breakdown and superior partial discharge resistance, compared to the insulating films of the comparative examples.

### <Evaluation 3 of Partial Discharge Resistance>

### (Partial Discharge Resistance Test of Insulating Coatings Prepared with Electrodeposition Paints)

The insulating coatings prepared with the electrodeposition paints in Example 6 and Comparative Example 6 were evaluated for partial discharge resistance, using the following testing method.

Specifically, the testing method was as follows: As shown in Fig. 3, sequentially from below, a nickel-plated copper sheet 13 coated with an insulating coating 12 by electrodeposition was mounted on a stainless steel support 14. A metal ball (diameter: 2 mm) 8 and a copper tube 7 were sequentially placed on the nickel-plated copper sheet 13 such that the nickel-plated copper sheet 13 was pressed under the weight of the copper tube 7, with the copper tube 7 being immovably fixed. The copper tube 7 and the nickel-plated copper sheet 13 were connected to a power supply, such that the metal ball 8 served as a high-voltage electrode and the nickel-plated copper sheet 13 as a low-voltage electrode. With this structure, partial discharge was induced across the metal ball and the electrodeposited insulating coating, and the time to a breakdown of the insulating coating was measured. The Volt-Endurance and Destruction Tester mentioned above was used as the measuring apparatus. Measurements were performed at a voltage of 1.5 kV, which was equal to or higher than the partial discharge starting voltage, and a frequency of 60 Hz. The results are shown in Table 3.

**Table 3**

| | Lactate Ion-Based Hydrotalcite Content (Mass%) | Thickness (µm) | Breakdown Time (h) |
|---|---|---|---|
| Example 6 | 0.5 | 19 | 3.3 |
| Comparative Example 6 | Not Added | 19 | 0.3 |

It is seen from Table 3 that the insulating coating containing the lactate ion-based hydrotalcite of Example 6 exhibited a longer time to a breakdown and superior partial discharge resistance, compared to the insulating coating of Comparative Example 6.

### <Evaluation by Treeing Resistance Test>

A treeing resistance test is available as one partial discharge resistance test. A tree refers to a tree-like crack formed in a resin cured product due to partial discharge with the passage of time. A breakdown occurs when the tree extends over the entire path across the electrodes.

### (Preparation and Evaluation of Specimens)

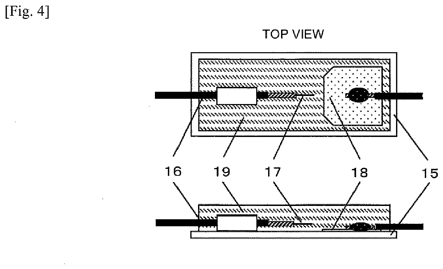

An IV electric wire was provided in the configuration shown in Fig. 4, wherein, on a glass sheet 15, a tungsten wire 17 as an anode was fixed at an edge of an IV electric wire 16, and an aluminum sheet 18 as a cathode was fixed. The inter-electrode distance between the tungsten wire 17 as the anode and the aluminum sheet 18 as the cathode was 1 mm, and the distance between the tungsten wire 17 and aluminum sheet 18, and the glass sheet 15 was 0.5 to 1 mm. A peripheral portion of the structure was molded with the partial discharge-resistant electrical insulating resin composition prepared in Example 7, and then put in a heating dryer and cured by heating for 2 hours at 70°C and then for 8 hours at 140°C. In this manner, a resin composition specimen for the treeing resistance test was prepared. Ten such specimens were prepared. Each specimen had a thickness of 1.2 to 1.5 mm. Additionally, ten specimens were prepared similarly by using the epoxy resin composition of Comparative Example 7 instead of the partial discharge-resistant electrical insulating resin composition. Additionally, ten specimens were prepared similarly by using the silica-containing epoxy resin composition of Comparative Example 8 instead of the partial discharge-resistant electrical insulating resin composition. An alternating current at 60 Hz and 17.5 kV was applied to each of the specimens, and the time to electrical conduction across the electrodes (breakdown) was measured. Measurements were performed for the respective ten specimens, and the geometric mean of the measured results was calculated as the measured value, excluding specimens that could not be measured for reasons such as experiencing a breakdown while the voltage was increased. The results are shown in Table 4.

Furthermore, the specimens molded with the partial discharge-resistant electrical insulating resin composition prepared in Example 7 were left standing overnight in a sealed tank set at a relative humidity of 75.3% at 25°C to absorb moisture, such that the hydrotalcite compound in the specimens had interlayer water back therein. In this manner, epoxy resin composition specimens containing the hydrotalcite compound retaining the interlayer water were prepared. For each of the specimens, the time to a breakdown was measured in the same manner as described above.

**Table 4**

| | Breakdown Time (Average Time, hr) |
|---|---|
| Example 7 | 1.6 |
| Example 7 (after Moisture Absorption) | 4.1 |
| Comparative Example 7 | 0.1 |
| Comparative Example 8 | 0.2 |

It is seen from Table 4 that the resin composition of Example 7 exhibited a longer time to a breakdown and superior treeing resistance, compared to the resin composition of Comparative Example 7. It is also seen that the resin composition of Example 7 exhibited a longer time to a breakdown and superior treeing resistance, compared to the silica-containing epoxy resin composition of Comparative Example 8. Furthermore, from the fact that the resin composition of Example 7 after moisture absorption exhibited a longer time to a breakdown, it is seen that the partial discharge resistance was improved because the hydrotalcite compound after losing the interlayer water absorbed water vapor or the like in the air to have interlayer water back again. This shows that the hydrotalcite compound after releasing the interlayer water recovers the effect of reducing heat generation, by absorbing water vapor or the like in the air.

### Reference Signs List

- 1: electrode
- 2: GAP-forming film
- 3, 9: insulating film
- 4: metal sheet
- 5: electrode
- 6: void
- 7: copper tube
- 8: metal ball
- 10: conductive grease
- 11: aluminum sheet
- 12: insulating coating
- 13: nickel-plated copper sheet
- 14: stainless steel support
- 15: glass sheet
- 16: IV electric wire
- 17: tungsten wire (anode)
- 18: aluminum sheet (cathode)
- 19: resin composition

## Claims

1. A partial discharge-resistant electrical insulating resin composition comprising a layered double hydroxide and a resin.

2. The partial discharge-resistant electrical insulating resin composition according to claim 1, wherein the layered double hydroxide is nanoparticles.

3. The partial discharge-resistant electrical insulating resin composition according to claim 1 or 2, wherein the layered double hydroxide is a swellable hydrotalcite compound.

4. The partial discharge-resistant electrical insulating resin composition according to any one of claims 1 to 3, wherein the resin is at least one resin selected from the group consisting of polyvinyl formal resin, polyurethane resin, polyamide resin, polyester resin, polyimide resin, polyamide-imide resin, polyetherimide resin, polyester-imide resin, and epoxy resin.

5. The partial discharge-resistant electrical insulating resin composition according to any one of claims 1 to 4, wherein a content of the layered double hydroxide is 0.1 to 60% by mass.

6. The partial discharge-resistant electrical insulating resin composition according to any one of claims 1 to 5, which is resistant to an inverter surge.

7. The partial discharge-resistant electrical insulating resin composition according to any one of claims 1 to 6, which is for use with an electrical apparatus in which inverter control is performed.

8. An insulating varnish comprising the partial discharge-resistant electrical insulating resin composition according to any one of claims 1 to 7 and a solvent.

9. An electrodeposition paint comprising the partial discharge-resistant electrical insulating resin composition according to any one of claims 1 to 7 and a solvent.

10. A cured product formed from the partial discharge-resistant electrical insulating resin composition according to any one of claims 1 to 7.

11. A method for producing the partial discharge-resistant electrical insulating resin composition according to any one of claims 1 to 7, comprising the steps of:
pre-gelling the layered double hydroxide; and
mixing the pre-gelled layered double hydroxide with the resin.

12. An electric wire comprising:
a conductor; and
an insulating coating comprising a single layer or a plurality of layers formed on an outer periphery of the conductor,
at least one layer of the insulating coating comprising the partial discharge-resistant electrical insulating resin composition according to any one of claims 1 to 7 or a cured product thereof.

13. A rotating electric machine comprising the electric wire according to claim 12.

14. An insulating film comprising an insulating layer comprising the partial discharge-resistant electrical insulating resin composition according to any one of claims 1 to 7 or a cured product thereof.

15. An insulating coating comprising an insulating layer comprising the partial discharge-resistant electrical insulating resin composition according to any one of claims 1 to 7 or a cured product thereof.
